# EUROPEAN PATENT SPECIFICATION

(11) **EP 1 347 605 B1**
(45) Date of publication and mention of the grant of the patent: **05.04.2006**
(21) Application number: 02257694.6
(22) Date of filing: 06.11.2002
(51) Int. Cl.: H04L 12/58, H04L 29/12

(54) **E-mail control method, apparatus, and program**
Steuerungsverfahren, Vorrichtung und Programm für elektronische Post
Procédé de contrôle, appareil et logiciel pour un système de courrier électronique

(30) Priority: 18.03.2002 JP 2002074308
(43) Date of publication of application: 24.09.2003
(73) Proprietor: FUJITSU LIMITED, Kawasaki-shi, Kanagawa 211-8588 (JP)
(72) Inventor: Tomono, Ryuji, c/o Fujitsu Limited, Kawasaki-shi, Kanagawa 211-8588 (JP)
(74) Representative: Stebbing, Timothy Charles

(56) References cited:
- WO-A-00/51323
- US-A1- 2001 051 990

## Description

The present invention relates to a technology that does not include the sender's E-mail address in an E-mail.

In known technology, when an electronic mail (E-mail) is sent from a sender to a receiver, the receiver knows the E-mail address of the sender because the E-mail address is included in the E-mail. Two problems arise in this method of sending E-mails.

First, even if the sender wants to communicate with the receiver temporarily, for example, only once, since the sender's address is included in the E-mail, there is a possibility that the sender receives unwanted mails from the receiver or from a third party.

Second, the sender cannot control the number of replies from the receiver. As a result, the sender may receive unwanted replies and further correspondence from the receiver.

US 2001/0051990 discloses a mail transfer device for relaying an electronic mail transmitted from a transmission terminal through a communication line and transferring the electronic mail thus relayed to a reception terminal which is equipped with means for converting to another address the electronic mail address of the transmission source of the mail which is transmitted from the transmission terminal through the communication line and then transferring the electronic mail to the reception terminal; and means for converting the address of the transmission destination of a reply mail to the address of the transmission source before the address conversion and then transferring the reply mail to the transmission terminal when the reply mail to the electronic mail is transmitted from the reception terminal.

WO 00/51323 discloses a control method and apparatus according to the preambles of the independent claims, enabling a message to be sent from a sending party to a recipient without the message revealing an identity of the sending party. The identity may be the name of the sending party, a calling line number associated with a calling line of the sending party, or an e-mail address of the sending party. The message may be a reply to a previous message or a forwarding message of an earlier message. In response to a message being received, a check is made to determine whether an anonymity feature is enabled for all messages received from the sending party, or whether the anonymity feature is enabled for the message. In response to finding the anonymity feature enabled for all messages or for the message, an anonymity indicator is included with the message. The presence of the anonymity indicator has the effect of withholding the identity of the sending party when the message is made available to or retrieved by the recipient. Despite the withholding of the identity of the sending party, the recipient may reply to the message. An embodiment provides that a message including an anonymity indicator may be rejected instead of routed to the recipient.

Embodiments of the present invention may provide a technology that does not include the sender's E-mail address in an E-mail. Further embodiments of the present invention may provide a technology that limits the number of replies from a receiver of an E-mail.

The invention is defined in the attached independent claims, to which reference should now be made. Further, preferred features can be found in the sub-claims appended thereto, to which reference should now be made.

For example, a sender sends an E-mail to a receiver. The E-mail includes at least a mail text, an E-mail address of the sender, an E-mail address of the receiver, and a specific conversion condition. The E-mail from the sender is received. It is judged whether the received E-mail includes the conversion condition. When the E-mail includes the conversion condition, the conversion condition is removed from the E-mail and stored. The E-mail is sent to the receiver based on the conversion condition.

According to another example, a sender sends an E-mail to a receiver. The E-mail includes at least a mail text, an E-mail address of the sender, and an E-mail address of the receiver. A specific conversion condition is stored in correlation with a plurality of E-mail addresses. The E-mail from the sender is received. It is judged whether the conversion condition has been stored in correlation with the E-mail address of the sender or the E-mail address of the receiver included in the received E-mail. If the conversion condition has been stored in correlation with the E-mail address of the sender or the E-mail address of the receiver, the E-mail is sent to the receiver based on the conversion condition.

The conversion condition might be a dummy address of the sender, a time duration during which a reply from the receiver is accepted, an allowable number of replies from the receiver, or any combination of these.

Other aspects of the invention relate to a method, an apparatus and a control program as defined in the claims.

Reference will now be made, by way of example only, to the following drawings, in which:
Fig. 1 is a block diagram of the system configuration of an embodiment of the present invention,
Fig. 2 is a flowchart of a conversion condition registration program in the embodiment,
Fig. 3 is a flowchart of a mail sending program in the embodiment,
Fig. 4 is a flowchart of a conversion processing program in the embodiment,
Fig. 5 is a flowchart of a reply processing program in the embodiment,
Fig. 6 shows an example of a conversion database (DB) in the embodiment, and
Fig. 7 is an example of a display screen on a user terminal in the embodiment.

An embodiment of the E-mail control method, E-mail control apparatus, and computer program according to the present invention will now be explained in detail with reference to the accompanying drawings.

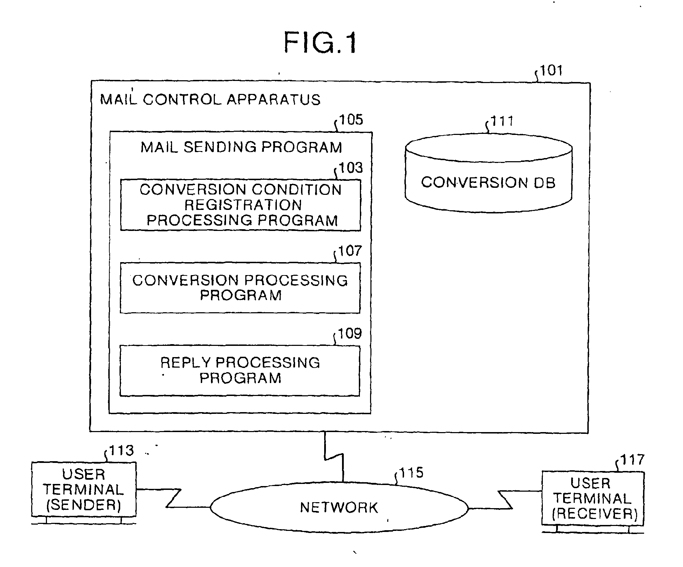

Fig. 1 is a block diagram of the overall system of an embodiment if the present invention. This system includes a mail control apparatus 101, at least one user terminal that functions as a mail sender 113, and at least one user terminal that functions as a mail receiver 117. The mail control apparatus 101, the mail sender 113, and the mail receiver 117 are connected to each other via a network 115.

The mail control apparatus 101 is, for example, installed in an E-mail control center of the Internet provider. The mail control apparatus 101 comprises a conversion DB 111 that stores sender addresses, converted addresses, expiration dates, allowable number of replies, and total number of replies. The mail control apparatus 101 comprises a memory where mail sending (computer) programs 105 are stored.

The mail sending programs 105 include a conversion condition registration processing program 103 for receiving address conversion conditions from a mail sender and setting it in the conversion DB 111, a conversion processing program 107 for receiving a send mail request from the mail sender and converting a sender address in the send mail request to an optional address based on the conversion DB 111, a reply processing program 109 for receiving a reply mail from a mail receiver and judging whether it is allowed to send the reply mail based on the conversion DB 111.

If an arrangement is made such that the sender can set the conversion conditions in the conversion DB 111 beforehand, then the conversion condition registration processing program 103 may not be provided.

To begin with, processing for receiving the address conversion condition and the conversion conditions including a mail reply conditions from the sender, and registering these conditions in the conversion DB 111 will be explained, using Fig. 1, Fig.2, Fig. 6 and Fig. 7.

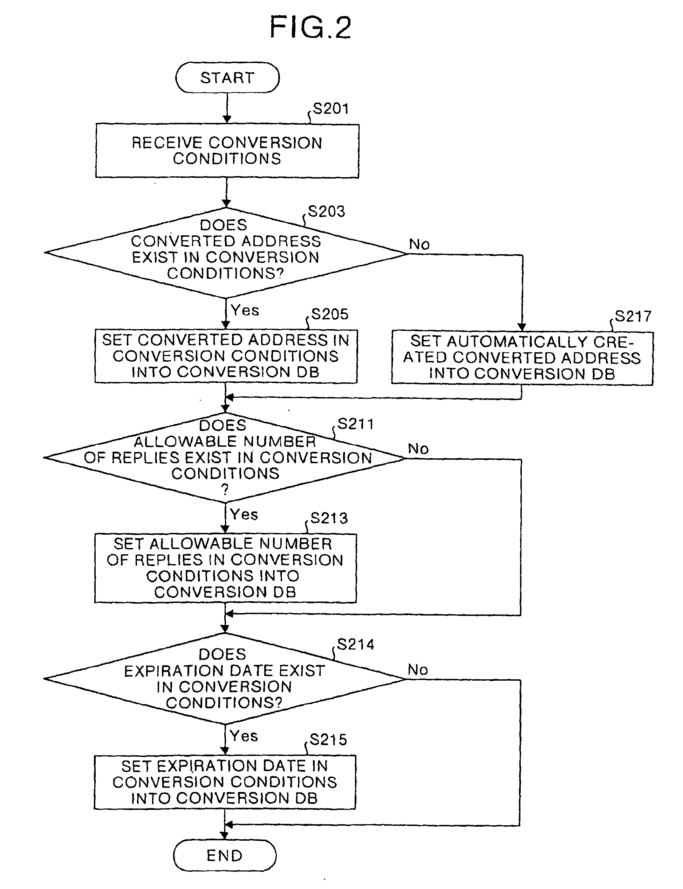

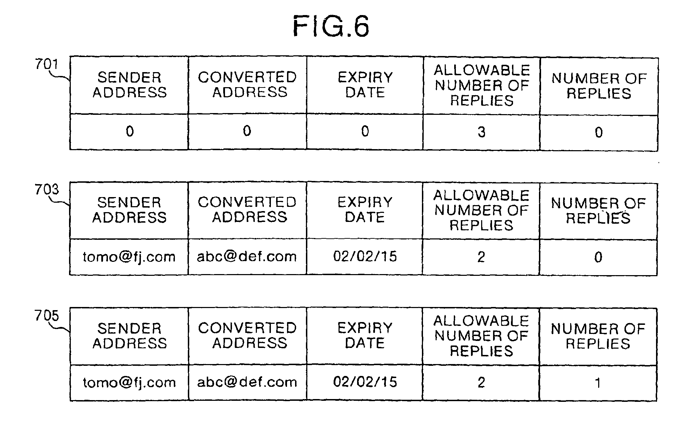

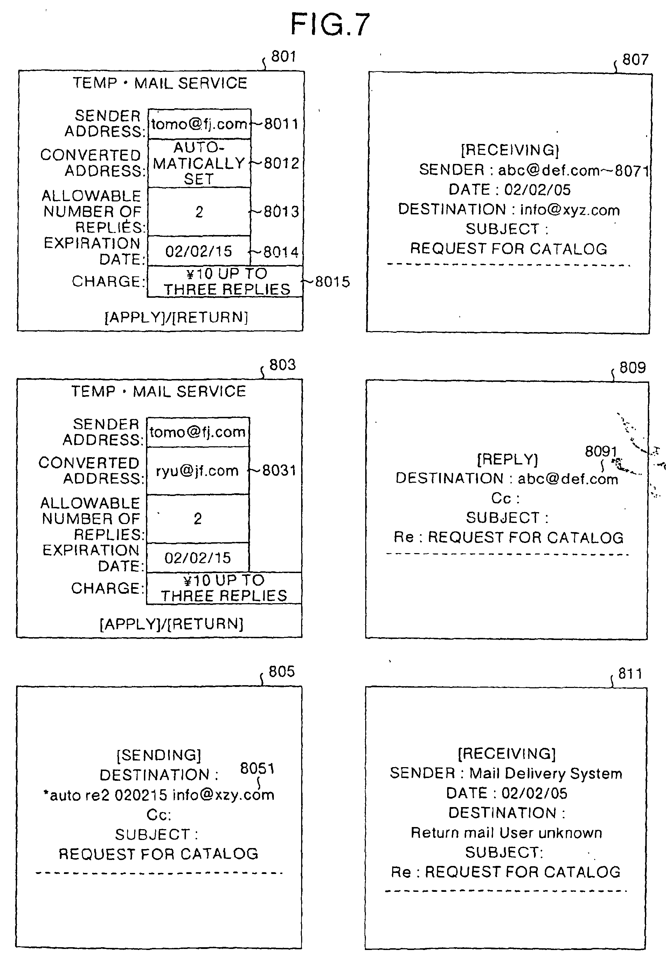

Fig. 2 is a flowchart which explains the conversion condition registration processing, Fig. 6 is a diagramwhich shows specific contents of the conversion DB 111, and Fig. 7 shows an example of a display screen of a user terminal (113, 117) which is operated by the mail sender or the mail replier.

A table 701 in Fig. 6 shows the default settings in the conversion DB 111 . As the conversion conditions, sender mail address "0", converted address "0", expiration date "0", allowable number of replies "3", and number of (total) replies "0" are registered.

The operation of this apparatus when a mail sender registers the address conversion conditions and the conversion conditions including the mail reply conditions will be explained, with reference to Fig. 2.

The mail sender uses the user terminal 113, to input the sender address and the conversion conditions including the converted address, expiration date and allowable number of replies with respect to this apparatus.

A screen 801 in Fig. 7 shows an example of a display screen of the user terminal 113, when the mail sender registers a sending mail address "tomo@fj.com" 8011, a converted address "automatic creation" 8012 which is automatically created by the system, the allowable number of replies "2" 8013, the expiration date "02/02/15" 8014, and a charging method "¥10 up to three replies" 8015, as the conversion conditions, by using the user terminal 113. A screen 803 in Fig. 7 shows an example of a display screen of the user terminal 113, when the mail sender registers the converted address "ryu@fj.com" 8031 input by the mail sender in advance to mail control apparatus 101.

The mail control apparatus 101 receives at step S201 (see Fig. 2) the conversion conditions input by the mail sender. The mail control apparatus 101 judges at step S203 whether the converted address exists in the conversion conditions received from the user terminal 113. If the converted address exists in the conversion conditions, at step S205 the converted address is registered in the conversion DB 111. If the converted address does not exist in the conversion conditions, at step S217 the mail control apparatus 101 automatically creates a converted address and registers that address in the conversion DB 111.

At step S211, it is judged whether an allowable number of replies exists in the conversion conditions. If the allowable number of replies exists in the conversion conditions, at step S213 the allowable number of replies is registered in the conversion DB 111. If the allowable number of replies does not exist in the conversion conditions, the system control is passed to a step S214 explained later.

At step S214, it is judged whether an expiration date exists in the conversion conditions . If the expiration date exists in the conversion conditions, at step S215 the expiration date is registered in the conversion DB 111. If the expiration date does not exist in the conversion conditions, the processing is ended.

A table 703 in Fig. 6 shows the contents of the conversion DB 111 after the registration processing shown in Fig. 2 ends. Table 703 shows that, "tomo@fj.com" is registered as the sender address, automatically created address "abc@ff. com" is registered as the converted address, "02/02/15" is registered as the expiration date, "2" is registered as the allowable number of replies, and "0" is registered as the number of replies.

The processing to perform either one of: the conversion condition registration processing, conversion processing or reply processing when a send mail request is received from a mail sender; based on the conversion conditions, a destination address or the sender address in the send mail request, and the conversion DB 111 will be explained, with reference to Fig. 1 to Fig. 7.

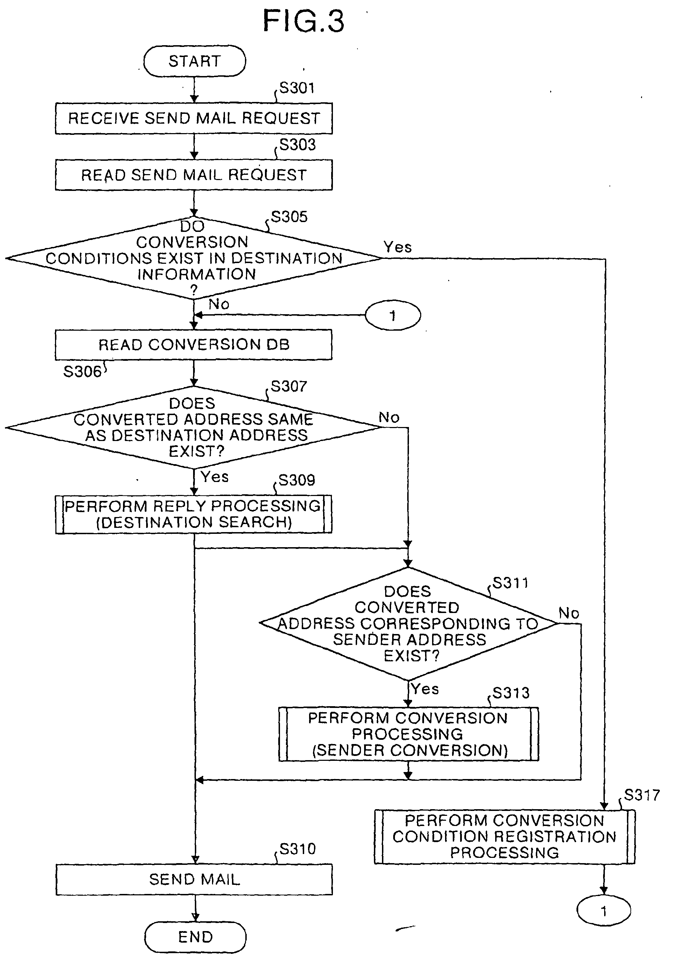

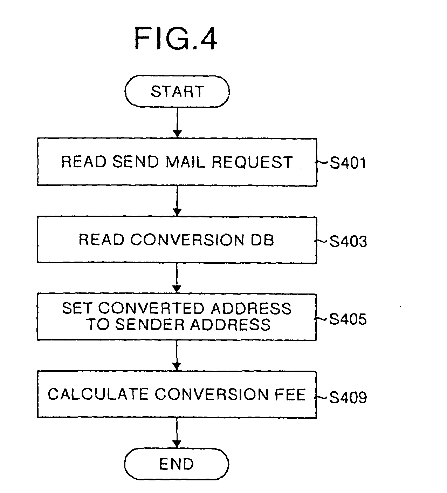

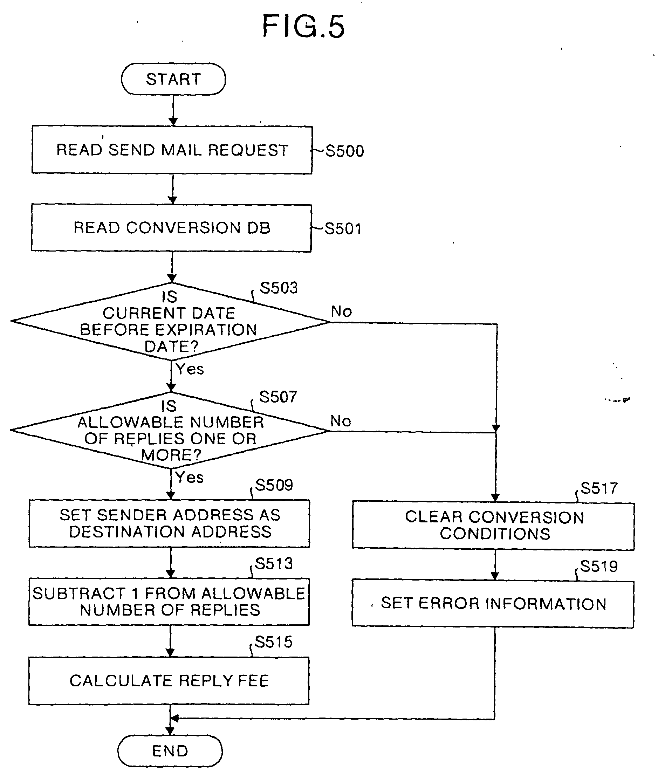

Fig. 3 is a flowchart which explains the mail sending processing including the conversion condition registration processing, the conversion processing and the reply processing. Fig. 4 is a flowchart which explains the conversion processing, and Fig. 5 is a flowchart which explains the reply processing.

The operation of the apparatus when the mail sending processing including the conversion condition registration processing, the conversion processing and the reply processing is to be performed will be explained, with reference to Fig. 3.

The mail sender uses the user terminal 113, to make a send mail request including a sender address and a destination address to the apparatus. The send mail request may include a converted address, an expiration date and the allowable number of replies.

A screen 805 in Fig. 7 shows an example of a display screen of the user terminal 113, when the mail sender uses the user terminal 113 to set "*" which means start of conversion conditions, "auto" which means "automatic creation" of a converted address, "rel2" which means "the allowable number of replies", and "020215" which means the expiration date, before the destination address "info@xyz.com", and to make a send mail request.

The mail control apparatus 101 receives the send mail request at step S301, and reads the send mail request at step S303.

At step S305, it is judged whether the conversion conditions exist in the send mail request. As a result of judgment, if the conversion conditions exist, at step S317, the conversion condition registration processing is performed, and thereafter at step S306, the conversion DB is to be read. S317 is the same processing as the conversion condition registration processing shown in Fig. 2. As a result of judgment, if the conversion conditions do not exist, at step S306, the conversion DB 111 is read, and at step S307 , it is judged whether an address the same as the destination address in the send mail request exists in the converted addresses in the conversion DB 111. As a result of judgment, if a converted address is the same as the destination address at step S309, the reply processing is performed, and at step S310, the sending processing of the send mail request is performed.

As a result of judgment, if no converted address is the same as the destination address, at step S311, it is judged whether an address the same as the sender address in the send mail request exists in the converted addresses in the conversion DB 111. As a result of judgment, if such an address exists, at step S313, the conversion processing is performed. As a result of judgment, if such an address does not exist, at step S310, the sending processing of the send mail request is performed.

The operation of the apparatus when the send mail request from a mail sender is received, and the sender address in the send mail request is converted to an optional address based on the conversion DB 111, to send the mail, will be explained with reference to Fig. 4.

The mail control apparatus 101 reads the send mail request at step S401, and reads the conversion DB 111 at step S403. At step S405, the apparatus sets the converted address in the conversion DB 111 which corresponds to the sender address in the send mail request, as the sender address in the send mail request, and calculates an accounting fee based on the converted address setting processing at step S409.

Reference numeral 8071 in a screen 807 in Fig. 7 shows an example of a display screen of a user terminal 117, when a mail receiver receives a mail in which "abc@def.com" , being a converted address automatically created by the apparatus, is set as the sender address, instead of the original sender address, "tomo@fj.com".

The operation of the apparatus, when the apparatus receives a send (reply) mail request from the mail receiver, and performs the reply processing by judging whether the sending (reply) of the send (reply) mail request is to be approved or not based on the conversion DB 111 will be explained with reference to Fig. 5.

The mail control apparatus 101 reads the send mail request at step S500, and reads the conversion DB 111 at step S501.

At step S503, it is judged whether the current date information controlled by the apparatus is before the expiration date in the conversion DB 111.

If the current date information is before the expiration date, at step S507, it is judged whether the allowable number of replies is one or more.

If the current date information is not before the expiration date, at step S517, the converted address in the conversion DB 111 corresponding to the sender address in the send mail request is deleted, and at step S519, error information is set with respect to the send (reply) mail request.

809 in Fig. 7 shows an example of a display screen of the user terminal 117, when the mail replier recognizes "abc@def.com" as the original sender address, and sends a reply.

A screen 811 in Fig. 7 shows an example of a display screen of the user terminal 117, when the mail receiver recognizes "abc@def.com" as the original sender address, and has replied, but since the expiration date or the allowable number of replies is exceeded, a mail with a title indicating a dead letter is sent to the mail receiver.

As a result of judgment at step S507, when the allowable number of replies is one or more, at step S509, an address corresponding to the appropriate converted address in the conversion DB 111 is set to the destination address in the send (reply) mail request. Thereafter, at step S513, the allowable number of replies in the conversion DB 111 is decremented and at step S515, calculation of the accounting fee is carried out based on the converted address setting processing.

A table 705 in Fig. 6 shows the contents of the conversion DB 111, when the reply processing is carried out based on the conversion conditions by mail control apparatus 101.

As the conversion conditions, there are registered in the DB 111 the sending mail address "tomo@fj.com", the converted address, "abc@def.com" automatically created by the apparatus, the expiration date "02/02/15", the allowable number of replies "2" and the number of replies "1".

When the allowable number of replies is not one or more, at step S517, the converted address in the conversion DB 111, corresponding to the sender address in the send mail request is deleted, and at step S519, error information is set, which is to be sent to the E-mail control server, which controls the sender address in the send (reply) mail request.

As explained above, according to the present invention, an E-mail from the sender is sent to the receiver based on the conversion conditions. The sender may set the conversion conditions or default conversion conditions may be used. When the sender sets the conversion condition he/she can include the conversion conditions in the E-mail. When the default conversion condition is used, the default conversion condition is stored in a memory beforehand.

The conversion condition may include dummy E-mail address of the sender. This dummy address can be included in the E-mail and the E-mail is sent to the receiver. As a result, the receiver will not know the true E-mail address of the sender.

The conversion condition may include a time duration for which a reply from the receiver is received. A reply E-mail from the receiver coming after this time duration is not transmitted to the sender. If the time duration is, for example, one month, then the receiver can send reply E-mails to the sender for only one month.

The conversion condition may include an allowable number of replies from the receiver. If a total number of reply E-mails from the receiver to the sender exceeds this allowable number then a reply E-mail from the receiver is not transmitted to the sender. If the allowable number of replies is, for example, three, then no more than three replies will be transmitted to the sender.

A charge may be imposed on either the sender or receiver for transmitting E-mails. The conversion condition may include charging information, such as a charge to the sender and/or the receiver, generated when any E-mail is sent. The charge may be fixed, or may be variable. The charge may be calculated depending on the cumulative number of replies sent, or a charge may only be imposed when the allowable number of replies have been sent.

Alternatively, a charge irrespective of the number of E-mails sent may be payable.

Thus, the present invention relates to a process in which a sender sending an E-mail to a receiver can limit the amount of replies received. The E-mail includes E-mail addresses of the sender and the receiver. The E-mail may also include a dummy E-mail address of the sender; alternatively, dummy addresses may be centrally stored in correlation with E-mail addresses of senders. When the E-mail is sent to the receiver, the E-mail address of the sender is replaced with the dummy E-mail address. The dummy E-mail address may be discarded after, for example, one month or after a certain number of replies have been sent. As a result, the receiver can only send a limited number of reply mails to the sender because the receiver does not know the true E-mail address of the sender.

## Claims

1. A control method for controlling a message sent from a sender (113) to a receiver (117), the control method comprising the steps of:
a sender (113) preparing a message having message content, a destination address of the receiver (117), a source address of the sender (113), and a conversion condition;
automatically inspecting the message to judge whether it contains the conversion condition; and
when it is judged that the message includes the conversion condition, automatically extracting the conversion condition from the message, storing the conversion condition, and relaying the message content to the destination address based on the conversion condition;
**characterised in that** the conversion condition includes a charging method set by the sender (113) for charging the receiver (117) in relation to the number of replies sent by the receiver.

2. The control method according to claim 1, further comprising the step of:
storing a conversion condition in correlation with at least one address;
wherein said step of automatically inspecting the message includes judging whether a conversion condition has been stored in correlation with the destination address or the source address; and
wherein said step of automatically extracting the conversion condition relays the message content to the destination address if a conversion condition has been so stored.

3. The control method according to claim 1 or 2 wherein the conversion condition includes at least one of: the source address, a converted address, an expiration time for sending replies and an allowable number of replies from the receiver, and wherein the control method further includes the steps of:
registering default settings for the conversion condition in a conversion condition database;
inputting a conversion condition including the converted address;
setting a charging method for charging the receiver in relation to the number of replies sent by the receiver;
displaying the conversion condition and the charging method on a display screen of the user terminal;
replacing the default settings in the conversion condition database with the actual conversion condition inputted by the sender; and
calculating an accounting fee based on the converted address setting.

4. The control method according to claim 1, 2 or 3 wherein the message is an E-mail, the message content comprises text, and the destination and source addresses are E-mail addresses.

5. The control method according to any of claims 1 to 4, wherein said preparing step comprises the sender (113) transmitting the message over a communications network and said remaining steps are carried out by a control center of the communications network.

6. The control method according to claim 4, wherein the conversion condition includes a dummy E-mail address of the sender (113), wherein the E-mail address of the sender in the message is changed to the dummy E-mail address when sending the message to the receiver (117).

7. The control method according to any preceding claim, wherein the conversion condition includes a time duration in which a reply from the receiver is permitted, wherein if a reply is received from the receiver (117) and the time of reception of the reply is not within the time duration, the method further comprises the step of preventing the reply from being transmitted to the source address of the sender (113) .

8. The control method according to any preceding claim, wherein the conversion condition includes an allowable number of replies from the receiver (117), wherein the number of reply messages sent by the receiver to the sender (113) is counted and if the number of reply messages sent exceeds the allowable number of replies then any reply message thereafter is prevented from being transmitted to the source address of the sender.

9. A control apparatus (101) comprising:
a receiving unit (105) for receiving a message from a sender (113) to be sent to a receiver (117), the message including at least a message content, a source address of the sender, a destination address of the receiver, and a conversion condition,
a judging unit (103) for judging whether the received message includes the conversion condition; and
a sending unit (107) for, when the judging unit (103) had judged that the message includes the conversion condition, removing the conversion condition from the message, storing the conversion condition, and sending the message to the receiver (117) based on the conversion condition; **characterised by**:
a charging unit for charging the receiver (117) in relation to the number of replies sent by the receiver, the conversion condition including a charging method set by the sender (113) for charging the receiver (117) in relation to the number of replies sent by the receiver.

10. Control apparatus according to claim 9, further comprising:
a storing unit (111) for storing a conversion condition in correlation with an address; wherein
said judging unit (103) is arranged for judging whether a conversion condition has been stored in correlation with the source address or the destination address included in the received message;
and said sending unit (107) is arranged for, when the judging unit (103) has judged that a conversion condition has been stored in the memory unit in correlation with the source address or the destination address, sending the message to the destination address based on the conversion condition.

11. Control apparatus according to claim 9 or 10 wherein the conversion condition includes at least one of: the source address, a converted address, an expiration time for sending replies, and an allowable number of replies from the receiver, and wherein the control apparatus further comprises:
a conversion condition database for registering default settings for a conversion condition; and
a charging unit for charging the receiver in relation to the number of replies, wherein
the sending unit (107) further comprises an inputting unit for inputting a conversion condition for setting the converted address, and a display screen for displaying the conversion condition and a charging method of the charging unit, the control apparatus (101) being adapted for replacing the default settings in the conversion condition database with an actual conversion condition inputted by the sender; and the charging unit is adapted for calculating an accounting fee based on the converted address setting.

12. Control apparatus according to claim 9, 10 or 11 wherein the message is an E-mail, the message content comprises text, and the destination and source addresses are E-mail addresses.

13. Control apparatus according to claim 12, wherein the conversion condition includes a dummy E-mail address of the sender (113), wherein the sending unit (107) changes the E-mail address of the sender in the E-mail to the dummy E-mail address when sending the E-mail to the receiver (117).

14. Control apparatus according to any of claims 9 to 13, wherein the conversion condition includes a time duration in which a reply from the receiver (117) is permitted,
the control apparatus further comprising a reply judgement unit (109) for judging, if a reply message is received from the receiver, whether the time of reception of the reply message is within the time duration, and for judging not to transmit the reply message to the source address of the sender (113) if the time of reception of the reply message is not within the time duration.

15. Control apparatus according to any of claims 9 to 14, wherein the conversion condition includes an allowable number of replies from the receiver (117),
the control apparatus further comprising a reply judgement unit (109) for counting a total number of reply messages sent by the receiver (117) to the sender (113), and preventing transmission of any reply message thereafter to the source address of the sender if the total number of reply messages exceeds the allowable number of replies.

16. A computer program (105) which when executed on a computer, causes the computer to perform the steps of the method according to any of claims 1 to 8.

17. A computer readable recording medium storing the program of claim 16.

## Revendications

1. Procédé de contrôle pour contrôler un message envoyé d'un expéditeur (113) à un destinataire (117), le procédé de contrôle comprenant les étapes consistant à :
un expéditeur (113) préparant un message ayant un contenu de message, une adresse de destination du destinataire (117), une adresse source de l'expéditeur (113), et une condition de conversion ;
inspecter automatiquement le message pour juger s'il contient la condition de conversion ; et
lorsqu'il est jugé que le message inclut la condition de conversion, extraire automatiquement la condition de conversion du message, stocker la condition de conversion, et relayer le contenu du message à l'adresse de destination sur la base de la condition de conversion ;
**caractérisé en ce que** la condition de conversion inclut un procédé de taxation établi par l'expéditeur (113) pour taxer le destinataire (117) relativement au nombre de réponses envoyées par le destinataire.

2. Procédé de contrôle selon la revendication 1, comprenant en outre l'étape consistant à :
stocker une condition de conversion en corrélation avec au moins une adresse ;
dans lequel ladite étape consistant à inspecter automatiquement le message inclut le jugement de si une condition de conversion a été stockée en corrélation avec l'adresse de destination ou l'adresse source ; et
dans lequel ladite étape consistant à extraire automatiquement la condition de conversion relaie le contenu du message à l'adresse de destination si une condition de conversion a été ainsi stockée.

3. Procédé de contrôle selon la revendication 1 ou 2, dans lequel la condition de conversion inclut au moins un parmi : l'adresse source, une adresse convertie, un temps d'expiration pour l'envoi de réponses et un nombre admissible de réponses du destinataire, et dans lequel le procédé de contrôle inclut en outre les étapes consistant à :
enregistrer des paramètres par défaut pour la condition de conversion dans une base de données de conditions de conversion ;
entrer une condition de conversion incluant l'adresse convertie ;
établir un procédé de taxation pour taxer le destinataire relativement au nombre de réponses envoyées par le destinataire ;
afficher la condition de conversion et le procédé de taxation sur un écran d'affichage du terminal d'utilisateur ;
remplacer les paramètres par défaut dans la base de données de conditions de conversion par la condition de conversion réelle entrée par l'expéditeur ; et
calculer des frais comptables basés sur le paramètre de l'adresse convertie.

4. Procédé de contrôle selon la revendication 1, 2 ou 3, dans lequel le message est un courrier électronique, le contenu du message comprend du texte, et les adresses de destination et source sont des adresses de courrier électronique.

5. Procédé de contrôle selon l'une quelconque des revendications 1 à 4, dans lequel ladite étape de préparation comprend l'expéditeur (113) transmettant le message sur un réseau de communications et lesdites étapes restantes sont exécutées par un centre de contrôle du réseau de communications.

6. Procédé de contrôle selon la revendication 4, dans lequel la condition de conversion inclut une adresse de courrier électronique fictive de l'expéditeur (113), dans lequel l'adresse de courrier électronique de l'expéditeur dans le message est changée en l'adresse de courrier électronique fictive lors de l'envoi du message au destinataire (117).

7. Procédé de contrôle selon l'une quelconque des revendications précédentes, dans lequel la condition de conversion inclut une durée de temps dans laquelle une réponse du destinataire est permise, dans lequel si une réponse est reçue du destinataire (117) et que le temps de réception de la réponse n'est pas à l'intérieur de la durée de temps, le procédé comprend en outre l'étape consistant à empêcher là réponse d'être transmise à l'adresse source de l'expéditeur (113).

8. Procédé de contrôle selon l'une quelconque des revendications précédentes, dans lequel la condition de conversion inclut un nombre admissible de réponses du destinataire (117), dans lequel le nombre de messages de réponse envoyés par le destinataire à l'expéditeur (113) est compté et si le nombre de messages de réponse envoyés dépasse le nombre admissible de réponses, alors tout message de réponse par la suite est empêché d'être transmis à l'adresse source de l'expéditeur.

9. Appareil de contrôle (101) comprenant :
une unité de réception (105)- pour recevoir un message d'un expéditeur (113) à envoyer à un destinataire (117), le message incluant au moins un contenu de message, une adresse source de l'expéditeur, une adresse de destination du destinataire, et une condition de conversion,
une unité de jugement (103) pour juger si le message reçu inclut la condition de conversion ; et
une unité d'envoi (107) pour, lorsque l'unité de jugement (103) a jugé que le message inclut la condition de conversion, enlever la condition de conversion du message, stocker la condition de conversion, et envoyer le message au destinataire (117) sur la base de la condition de conversion ; **caractérisé par** :
une unité de taxation pour taxer le destinataire (117) relativement au nombre de réponses envoyées par le destinataire, la condition de conversion incluant un procédé de taxation établi par l'expéditeur (113) pour taxer le destinataire (117) relativement au nombre de réponses envoyées par le destinataire.

10. Appareil de contrôle selon la revendication 9, comprenant en outre :
une unité de stockage (111) pour stocker une condition de conversion en corrélation'avec une adresse ; dans lequel
ladite unité de jugement (103) est disposée pour juger si une condition de conversion a été stockée en corrélation avec l'adresse source ou l'adresse de destination incluse dans le message reçu ;
et ladite unité d'envoi (107) est disposée pour, lorsque l'unité de jugement (103) a jugé qu'une condition de conversion a été stockée dans l'unité de mémoire en corrélation avec l'adresse source ou l'adresse de destination, envoyer le message à l'adresse de destination sur la base de la condition de conversion.

11. Appareil de contrôle selon la revendication 9 ou 10, dans lequel la condition de conversion inclut au moins un parmi : l'adresse source, une adresse convertie, un temps d'expiration pour l'envoi de réponses, et un nombre admissible de réponses du destinataire, et dans lequel l'appareil de contrôle comprend en outre :
une base de données de conditions de conversion pour enregistrer des paramètres par défaut pour une condition de conversion ; et
une unité de taxation pour taxer le destinataire relativement au nombre de réponses, dans lequel
l'unité d'envoi (107) comprend en outre une unité d'entrée pour entrer une condition de conversion pour établir l'adresse convertie, et un écran d'affichage pour afficher la condition de conversion et un procédé de taxation de l'unité de taxation, l'appareil de contrôle (101) étant adapté pour remplacer les paramètres par défaut dans la base de données de conditions de conversion par une condition de conversion réelle entrée par l'expéditeur ; et l'unité de taxation est adaptée pour calculer des frais comptables basés sur le paramètre de l'adresse convertie.

12. Appareil de contrôle selon la revendication 9, 10 ou 11, dans lequel le message est un courrier électronique, le contenu du message comprend du texte, et les adressés de destination et source sont des adresses de courrier électronique.

13. Appareil de contrôle selon la revendication 12, dans lequel la condition de conversion inclut une adresse de courrier électronique fictive de l'expéditeur (113), dans lequel l'unité d'envoi (107) change l'adresse de courrier électronique de l'expéditeur dans le courrier électronique en l'adresse de courrier électronique fictive lors dé l'envoi du courrier électronique au destinataire (117).

14. Appareil de contrôle selon l'une quelconque des revendications 9 à 13, dans lequel la condition de conversion inclut une durée de temps dans laquelle une réponse du destinataire (117) est permise,
l'appareil de contrôle comprenant en outre une unité de jugement de réponse (109) pour juger, si un message de réponse est reçu du destinataire, si le temps de réception du message de réponse est à l'intérieur de la durée de temps, et pour juger de ne pas transmettre le message de réponse à l'adresse source de l'expéditeur (113) si le temps de réception du message de réponse n'est pas à l'intérieur de la durée de temps.

15. Appareil de contrôle selon l'une quelconque des revendications 9 à 14, dans lequel la condition de conversion inclut un nombre admissible de réponses du destinataire (117),
l'appareil de contrôle comprenant en outre une unité de jugement de réponse (109) pour compter un nombre total de messages de réponse envoyés par le destinataire (117) à l'expéditeur (113), et empêcher la transmission de tout message de réponse par la suite à l'adresse source de l'expéditeur si le nombre total de messages de réponse dépasse le nombre admissible de réponses.

16. Programme informatique (105) qui lorsque exécuté sur un ordinateur, fait que l'ordinateur effectue les étapes du procédé selon l'une quelconque des revendications 1 à 8.

17. Support d'enregistrement lisible par ordinateur stockant le programme de la revendication 16.

## Patentansprüche

1. Steuerverfahren zum Steuern einer Nachricht, die von einem Absender (113) an einen Empfänger (117) gesendet wird, welches Steuerverfahren die Schritte umfaßt:
Vorbereiten einer Nachricht mit einem Nachrichteninhalt, einer Zieladresse des Empfängers (117), einer Quellenadresse des Absenders (113) und einer Konvertierungsbedingung durch einen Absender (113);
automatisches Prüfen der Nachricht, um zu beurteilen, ob sie die Konvertierungsbedingung enthält; und
wenn beurteilt wird, daß die Nachricht die Konvertierungsbedingung enthält, automatisches Extrahieren der Konvertierungsbedingung aus der Nachricht, Speichern der Konvertierungsbedingung und Weitersenden des Nachrichteninhaltes an die Zieladresse auf der Basis der Konvertierungsbedingung;
**dadurch gekennzeichnet, daß** die Konvertierungsbedingung ein durch den Absender (113) eingestelltes Gebührenberechnungsverfahren zum Belasten des Empfängers (117) bezüglich der durch den Empfänger gesendeten Anzahl von Antworten enthält.

2. Steuerverfahren nach Anspruch 1, das ferner den Schritt umfaßt:
Speichern einer Konvertierungsbedingung in Korrelation mit wenigstens einer Adresse;
bei dem der Schritt zum automatischen Prüfen der Nachricht das Beurteilen dessen enthält, ob eine Konvertierungsbedingung in Korrelation mit der Zieladresse oder der Quellenadresse gespeichert worden ist; und
bei dem der Schritt zum automatischen Extrahieren der Konvertierungsbedingung den Nachrichteninhalt an die Zieladresse weitersendet, falls eine Konvertierungsbedingung gespeichert worden ist.

3. Steuerverfahren nach Anspruch 1 oder 2, bei dem die Konvertierungsbedingung wenigstens eines enthält von:
der Quellenadresse, einer konvertierten Adresse, einer Ablaufzeit zum Senden von Antworten und einer zulässigen Anzahl von Antworten von dem Empfänger, und bei dem das Steuerverfahren ferner die Schritte umfaßt:
Registrieren von Standardeinstellungen für die Konvertierungsbedingung in einer Konvertierungsbedingungsdatenbank;
Eingeben einer Konvertierungsbedingung, die die konvertierte Adresse enthält;
Einstellen eines Gebührenberechnungsverfahrens zum Belasten des Empfängers bezüglich der durch den Empfänger gesendeten Anzahl von Antworten;
Anzeigen der Konvertierungsbedingung und des Gebührenberechnungsverfahrens an einem Bildschirm des Nutzerterminals;
Ersetzen der Standardeinstellungen in der Konvertierungsbedingungsdatenbank durch die gegenwärtige Konvertierungsbedingung, die durch den Absender eingegeben wurde; und
Berechnen einer Abrechnungsgebühr auf der Basis der Einstellung der konvertierten Adresse.

4. Steuerverfahren nach Anspruch 1, 2 oder 3, bei dem die Nachricht eine E-Mail ist, der Nachrichteninhalt Text umfaßt und die Ziel- und Quellenadressen E-Mail-Adressen sind.

5. Steuerverfahren nach irgendeinem der Ansprüche 1 bis 4, bei dem der Vorbereitungsschritt das Übertragen der Nachricht über ein Kommunikationsnetz durch den Absender (113) umfaßt und die übrigen Schritte durch eine Steuerzentrale des Kommunikationsnetzes ausgeführt werden.

6. Steuerverfahren nach Anspruch 4, bei dem die Konvertierungsbedingung eine Blind-E-Mail-Adresse des Absenders (113) enthält, wobei die E-Mail-Adresse des Absenders in der Nachricht in die Blind-E-Mail-Adresse geändert wird, wenn die Nachricht an den Empfänger (117) gesendet wird.

7. Steuerverfahren nach irgendeinem vorhergehenden Anspruch, bei dem die Konvertierungsbedingung eine Zeitdauer enthält, in der eine Antwort von dem Empfänger zulässig ist, wobei dann, falls eine Antwort von dem Empfänger (117) empfangen wird und die Zeit des Empfangs der Antwort nicht innerhalb der Zeitdauer liegt, das Verfahren ferner den Schritt zum Verhindern des Übertragens der Antwort an die Quellenadresse des Absenders (113) umfaßt.

8. Steuerverfahren nach irgendeinem vorhergehenden Anspruch, bei dem die Konvertierungsbedingung eine zulässige Anzahl von Antworten von dem Empfänger (117) enthält, wobei die Anzahl von Antwortnachrichten, die durch den Empfänger an den Absender (113) gesendet werden, gezählt wird und danach dann, falls die Anzahl von gesendeten Antwortnachrichten die zulässige Anzahl von Antworten überschreitet, das Übertragen einer jeden Antwortnachricht zu der Quellenadresse des Absenders verhindert wird.

9. Steuervorrichtung (101) mit:
einer Empfangseinheit (105) zum Empfangen einer Nachricht von einem Absender (113), um an einen Empfänger (117) gesendet zu werden, welche Nachricht wenigstens einen Nachrichteninhalt, eine Quellenadresse des Absenders, eine Zieladresse des Empfängers und eine Konvertierungsbedingung enthält;
einer Beurteilungseinheit (103) zum Beurteilen dessen, ob die empfangene Nachricht die Konvertierungsbedingung enthält; und
einer Sendeeinheit (107) zum Entfernen, wenn die Beurteilungseinheit (103) beurteilt hat, daß die Nachricht die Konvertierungsbedingung enthält, der Konvertierungsbedingung von der Nachricht, zum Speichern der Konvertierungsbedingung und zum Senden der Nachricht an den Empfänger (117) auf der Basis der Konvertierungsbedingung; **gekennzeichnet durch**:
eine Gebührenberechnungseinheit zum Belasten des Empfängers (117) bezüglich der **durch** den Empfänger gesendeten Anzahl von Antworten, wobei die Konvertierungsbedingung ein durch den Absender (113) eingestelltes Gebührenberechnungsverfahren zum Belasten des Empfängers (117) bezüglich der durch den Empfänger gesendeten Anzahl von Antworten enthält.

10. Steuervorrichtung nach Anspruch 9, ferner mit:
einer Speichereinheit (111) zum Speichern einer Konvertierungsbedingung in Korrelation mit einer Adresse; bei der
die Beurteilungseinheit (103) zum Beurteilen dessen angeordnet ist, ob eine Konvertierungsbedingung in Korrelation mit der Quellenadresse oder der Zieladresse, die in der empfangenen Nachricht enthalten ist, gespeichert worden ist;
und die Sendeeinheit (107) angeordnet ist, um dann, wenn die Beurteilungseinheit (103) beurteilt hat, daß eine Konvertierungsbedingung in der Speichereinheit in Korrelation mit der Quellenadresse oder der Zieladresse gespeichert worden ist, die Nachricht auf der Basis der Konvertierungsbedingung an die Zieladresse zu senden.

11. Steuervorrichtung nach Anspruch 9 oder 10, bei der die Konvertierungsbedingung wenigstens eines enthält von:
der Quellenadresse, einer konvertierten Adresse, einer Ablaufzeit zum Senden von Antworten und einer zulässigen Anzahl von Antworten von dem Empfänger, und bei der die Steuervorrichtung ferner umfaßt:
eine Konvertierungsbedingungsdatenbank zum Registrieren von Standardeinstellungen für eine Konvertierungsbedingung; und
eine Gebührenberechnungseinheit zum Belasten des Empfängers bezüglich der Anzahl von Antworten, wobei
die Sendeeinheit (107) ferner eine Eingabeeinheit zum Eingeben einer Konvertierungsbedingung zum Einstellen der konvertierten Adresse umfaßt, und einen Bildschirm zum Anzeigen der Konvertierungsbedingung und eines Gebührenberechnungsverfahrens der Gebührenberechnungseinheit, welche Steuervorrichtung (101) dafür ausgelegt ist, um die Standardeinstellungen in der Konvertierungsbedingungsdatenbank durch eine gegenwärtige Konvertierungsbedingung zu ersetzen, die durch den Absender eingegeben wurde; und die Gebührenberechnungseinheit dafür ausgelegt ist, um eine Berechnungsgebühr auf der Basis der Einstellung der konvertierten Adresse zu berechnen.

12. Steuervorrichtung nach Anspruch 9, 10 oder 11, bei der die Nachricht eine E-Mail ist, der Nachrichteninhalt Text umfaßt und die Ziel- und Quellenadressen E-Mail-Adressen sind.

13. Steuervorrichtung nach Anspruch 12, bei der die Konvertierungsbedingung eine Blind-E-Mail-Adresse des Absenders (113) enthält, wobei die Sendeeinheit (107) die E-Mail-Adresse des Absenders in der E-Mail in die Blind-E-Mail-Adresse ändert, wenn die E-Mail an den Empfänger (117) gesendet wird.

14. Steuervorrichtung nach irgendeinem der Ansprüche 9 bis 13, bei der die Konvertierungsbedingung eine Zeitdauer enthält, in der eine Antwort von dem Empfänger (117) zulässig ist,
wobei die Steuervorrichtung ferner eine Antwortbeurteilungseinheit (109) umfaßt, zum Beurteilen, falls eine Antwortnachricht von dem Empfänger empfangen wird, ob die Zeit des Empfangs der Antwortnachricht innerhalb der Zeitdauer liegt, und zum Beurteilen, die Antwortnachricht nicht an die Quellenadresse des Absenders (113) zu übertragen, falls die Zeit des Empfangs der Antwortnachricht nicht innerhalb der Zeitdauer liegt.

15. Steuervorrichtung nach irgendeinem der Ansprüche 9 bis 14, bei der die Konvertierungsbedingung eine zulässige Anzahl von Antworten von dem Empfänger (117) enthält,
wobei die Steuervorrichtung ferner eine Antwortbeurteilungseinheit (109) umfaßt, zum Zählen einer Gesamtanzahl von Antwortnachrichten, die durch den Empfänger (117) an den Absender (113) gesendet wurde, und zum Verhindern des Übertragens einer jeden Antwortnachricht danach an die Quellenadresse des Absenders, falls die Gesamtanzahl von Antwortnachrichten die zulässige Anzahl von Antworten überschreitet.

16. Computerprogramm (105), das dann, wenn es auf einem Computer ausgeführt wird, bewirkt, daß der Computer die Schritte des Verfahrens nach irgendeinem der Ansprüche 1 bis 8 ausführt.

17. Computerlesbares Aufzeichnungsmedium, welches das Programm von Anspruch 16 speichert.
